(19) Europäisches Patentamt / European Patent Office / Office européen des brevets

(11) **EP 1 981 109 A1**

(12) **EUROPEAN PATENT APPLICATION**
published in accordance with Art. 158(3) EPC

(43) Date of publication:
**15.10.2008 Bulletin 2008/42**

(51) Int Cl.:
*H01M 8/04* (2006.01)    *H01M 8/02* (2006.01)

(21) Application number: **07706638.9**

(22) Date of filing: **12.01.2007**

(86) International application number:
**PCT/JP2007/050295**

(87) International publication number:
**WO 2007/083571 (26.07.2007 Gazette 2007/30)**

(84) Designated Contracting States:
**DE FR GB**

(30) Priority: **19.01.2006 JP 2006010561**

(71) Applicants:
• **Toyo Seikan Kaisha, Ltd.**
**Tokyo 100-0011 (JP)**
• **KABUSHIKI KAISHA TOSHIBA**
**Tokyo 105-8001 (JP)**

(72) Inventors:
• **IMODA, Daisukec/o TOYO SEIKAN KAISHA, LTD.**
**Kanagawa;2300047 (JP)**

• **KINOUCHI, Koukic/o TOYO SEIKAN KAISHA, LTD.**
**, Kanagawa;2300047 (JP)**
• **TAKAHASHI, Kenichic/o KABUSHIKI KAISHA TOSHIBA**
**Kanagawa;2358522 (JP)**

(74) Representative: **TBK-Patent**
**Bavariaring 4-6**
**80336 München (DE)**

(54) **ELASTIC MEMBER FOR METHANOL FUEL CELL CARTRIDGE**

(57)    This invention provides an elastic member for a methanol fuel cell cartridge, comprising an elastomer having a compression set of 1 to 80 and a hardness (type A) of 40 to 70 and having an operating limit time of 10,000 hours or more determined by a DMFC performance test for the fuel cell. The elastic member can prevent leakage of methanol from a methanol fuel cell cartridge, or a connection part between the cartridge and a fuel cell body and, at the same time, can realize long-term operation of the fuel cell without causing deterioration of power generation performance.

FIG. 4

**Description**

Technical Field

The present invention relates to an elastic member used as a sealing member, a valve biasing member, or the like of a portable methanol fuel cell cartridge suitably used as a fuel tank, a refill container, or the like for a direct methanol fuel cell (DMFC).

Background Art

A direct methanol fuel cell (DMFC) employing methanol as a fuel has attracted attention as a power source for a mobile device such as a laptop computer or a cell phone, and various types thereof are known. Further, for reduction in size of a cell in each of those fuel cells, reduction in size and weight of a fuel tank (cartridge) storing methanol as a fuel is required, and various cartridges are proposed (see Patent Documents 1 and 2).

Patent Document 1: JP-A-2004-152741
Patent Document 2: JP-A-2004-155450

Methanol has a low boiling point of about 65°C and is a volatile and flammable liquid. Further, methanol is toxic to human bodies. Thus, in a methanol fuel cell, prevention of methanol leakage from a cartridge storing methanol and a connection part between a fuel cell body and the cartridge is an important object.
In general, an elastic member for sealing such as an O-ring or packing used in high temperatures is required to have a low compression set. Thus, such an elastic member usually employs vulcanized EPDM (ethylene/propylene/diene copolymer). A vulcanization accelerator to be used for vulcanized EPDM generally employs an inexpensive metal oxide or metal salt of an acid such as zinc oxide (zinc white).
However, the case where an elastic member for a methanol fuel cell cartridge employs vulcanized EPDM containing a metal oxide or a metal salt of an acid as a vulcanization accelerator has problems in that the metal in the vulcanized EPDM leaks into methanol and power generation performance of the fuel cell deteriorates.

Disclosure of the Invention

Problem to be solved by the Invention

Therefore, an object of the present invention is to provide an elastic member for a methanol fuel cell cartridge capable of preventing methanol leakage from the methanol fuel cell cartridge or a connection part between the cartridge and a fuel cell body and realizing a long-term operation of the fuel cell without deterioration of power generation performance.

Means for solving the Problem

The present invention employs the following features 1 to 5 for attaining the object described above.

1. An elastic member for a methanol fuel cell cartridge comprising an elastomer having a compression set of 1 to 80, a hardness (Type A) of 40 to 70, and an operating limit time of 10,000 hours or more determined by a DMFC performance test for the fuel cell.
2. An elastic member for a methanol fuel cell cartridge according to item 1, characterized in that the elastomer is selected from a peroxide crosslinked ethylene/propylene/diene copolymer, a dynamic vulcanizated olefin-based thermoplastic elastomer, and an olefin crystalline pseudo-crosslinked olefin-based thermoplastic elastomer.
3. An elastic member for a methanol fuel cell cartridge according to item 1 or 2, characterized in that the elastic member is used for a connection part between the methanol fuel cell cartridge and a fuel cell body.
4. An elastic member for a methanol fuel cell cartridge according to any one of items 1 to 3, characterized in that the elastic member serves as a sealing member.
5. An elastic member for a methanol fuel cell according to any one of items 1 to 3, characterized in that the elastic member serves as a valve biasing member.

In the present invention, an operating limit time determined by a DMFC performance test for a fuel cell indicates a value measured as described below.
(DMFC performance test)

Power generation cell output density: 37.5 mW/cm$^2$
Anode: (standard solution) 5 vol% MeOH 0.1 cc/min/cm$^2$
Cathode: Air 32 cc/min/cm$^2$
Temperature: 30°C
A cell is subjected to aging, and an electromotive voltage of 0.375 V at a current density of 100 mA/cm$^2$ is confirmed. Then, the cell is used for the test.
MeOH was prepared by using methanol (special grade) available from Wako Pure Chemical Industries, Ltd. and pure water purified by using Milli-Q (Ultrapure Organic Cartridge) and having an electrical resistance of more than 18 MΩ·cm.

(Test procedure)

In a cartridge having a volume of 50 cc, 0.03 g of a finely chopped elastomer was immersed in 25 cc of methanol (special grade). The cartridge was sealed with a cap having a tetrafluoroethylene packing and was stored at 60°C for 1 week. Then, Milli-Q was used to prepare an aqueous methanol solution having a methanol concentration of 5 vol% as a test solution.
A standard solution was used as a fuel to confirm that an electromotive voltage of 0.375 V or more was assured, and the electromotive voltage generated was referred to as an initial electromotive voltage ($V_0$). Then, the test solution was used as a fuel for a test. The electromotive voltage ($V_1$) decreased with time, and a test time providing an electromotive voltage decrease [$(V_1-V_0)$ /$V_0 \times 100$] of 3% was referred to as an operating limit time (T).
Further, in the present invention, the compression set of the elastomer refers to a value of distortion measured after treatment of the elastomer at 25% distortion and 70°C for 24 hours in accordance with JIS K6262 "Method of testing compression set of vulcanized rubber and thermoplastic rubber".
The hardness (TypeA) of the elastomer refers to a value measured by using a measuring device "Hardmatic HH-331" manufactured by Mitutoyo Corporation in accordance with JIS K6253 (Type A).

Effects of the Invention

An elastic member of the present invention is used as a sealing member such as an O-ring or a gasket or as a valve biasing member, to thereby reliably prevent methanol leakage from a methanol fuel cell cartridge or a connection part between the cartridge and a fuel cell body. Further, a fuel cell allowing long-term operation without deterioration of power generation performance can be realized.

Brief Description of the Drawings

[Fig. 1] A schematic diagram explaining a structure of a dynamic vulcanizated TPO constituting an elastic member for a methanol fuel cell cartridge of the present invention.
[Fig. 2] A schematic diagram explaining a structure of a pseudo-crosslinked TPO constituting an elastic member for a methanol fuel cell cartridge of the present invention.
[Fig. 3] A sectional schematic diagram showing an example of a methanol fuel cell cartridge.
[Fig. 4] An enlarged sectional schematic diagram of a connection part of the cartridge of Fig. 3.

Description of Reference Numerals

1    methanol fuel cell cartridge
2    connector
3    connection part of fuel cell body
4    biasing member
5    valve operating part
6    gasket
7    O-ring

Best Mode for carrying out the Invention

In the present invention, an elastomer having a compression set of 1 to 80, a hardness (Type A) of 40 to 70, and an operating limit time of 10,000 hours or more determined by a DMFC performance test for a fuel cell is used as an elastic member used as a sealing member, a valve biasing member, or the like of a methanol fuel cell cartridge.

An elastomer having a hardness (Type A) within a range of 40 to 70 can provide an inexpensive sealing member causing a small stress on a resin molded product employing the elastomer. A hardness (TypeA) of the elastomer of more than 70 increases rebound resilience, and a fit with the elastomer causes an excessive load on a resin molded product. As a result, the resin molded product is deformed, and sealing property of the resin molded product becomes insufficient. The hardness of the elastomer is desirably as small as possible, but realization of a hardness (Type A) of less than 40 without use of a plasticized oil involves difficulties in manufacturing technology and is economically disadvantageous.

Examples of such an elastomer include: a peroxide crosslinked ethylene/propylene/diene copolymer (hereinafter, referred to as "peroxide crosslinked EPDM"); a dynamic vulcanized olefin-based thermoplastic elastomer (hereinafter, referred to as "dynamic vulcanized TPO"); and an olefin crystalline pseudo-crosslinked olefin-based thermoplastic elastomer (hereinafter, referred to as "pseudo-crosslinked TPO").

Those elastomers each preferably have a cation index of 1 to 30 measured in a methanol immersion test described below.

(Cation index)

$$I = A+2B+3C$$

I: Cation index

$$A = [Na]+[K]$$

$$B = [Ca]+[Ti]-[Fe]+[Co]+[Ni]+[Zn]+[Ge]$$

$$C = [Al]+[Cr]+[Sb]$$

Note that a concentration of each element is in ppb order.

(Measurement method)

An element concentration of each of [Na], [Mg], [Al], [K], [Ca], [Ti], [Cr], [Fe], [Co], [Ni], [Zn], [Ge], and [Sb] is measured in ppb order and determined through an ICP mass analysis method employing inductively coupled plasma (ICP) as an ionization source.
Measuring device: 7500CS manufactured by Agilent Technologies, Inc.
RF power: 1,500 W, RF matching: 1.7 V
Carrier gas: 0.3 mL/min, Make-up gas: 0.65 mL/min
Option gas: 15%
Reaction gas: $H_2$ 2.5 mL, He 4.5 mL
Aspiration method: Negative pressure aspiration
Shield torch: equipped

(Test procedure)

25 cc of methanol (special grade) available from Wako Pure Chemical Industries, Ltd. was filled into a cartridge having a volume of 50 cc. 0. 03 g of a finely chopped elastomer was immersed therein, and the whole was stored at 60°C for 1 week. The resultant was used as a test solution for measurement.

The peroxide crosslinked EPDM to be used as an elastic member of the present invention refers to a copolymer of ethylene, an α-olefin having 3 or more carbon atoms such as propylene, and a non-conjugated diene crosslinked with an organic peroxide.
The α-olefin having 3 or more carbon atoms forming a copolymer with ethylene is preferably an α-olefin having 3 to 10 carbon atoms. Examples thereof include propylene, 1-butene, 1-pentene, 1-hexene, 1-octene, and 1-decene. Of those, propylene or amixture of propylene and another α-olefin is particularly preferably used.

Examples of the non-conjugated diene include: dicyclopentadiene; 1,4-hexadiene; 1,9-decadiene; cyclooctadiene; norbornadiene; methylene norbornene; ethylidene norbornene; and 7-methyl-1,6-octadiene. Of those, ethylidene norbornene is particularly preferably used because moderate crosslinking can be realized in an ethylene/propylene/diene copolymer.

As amixing ratio of each of monomers forming the peroxide crosslinked EPDM, an ethylene/(ethylene+α-olefin) ratio is preferably 30 to 70 mol%. An ethylene ratio of more than 70 mol% causes partial crystallization of ethylene, degrades elastic recovery, and provides a compression set of more than 80 at 70°C. On the other hand, an ethylene ratio of less than 30 mol% provides a larger EPDM hardness of more than 70 and a larger rebound resilience, to thereby cause deformation of a resin member of the cartridge and provide insufficient sealing property.

A content of the non-conjugated diene such as ethylidene norbornene is preferably 5 to 40 as an iodine number. For example, an ethylidene norbornene content of less than 5 as an iodine number causes insufficient crosslinking and insufficient elastic recovery and provides a compression set of more than 80. On the other hand, an ethylidene norbornene content of more than 40 as an iodine number degrades extrusion property and inhibits molding.

Examples of the organic peroxide to be used as a crosslinking agent include: dicumyl peroxide; di-t-butyl peroxide; 2,5-dimethyl-2,5-di(t-butylperoxy)hexane; 2,5-dimethyl-di(t-butylperoxy)hexyne-3; bis(t-butylperoxyisopropyl) benzene; 1,1-bis(t-butylperoxy)-3,3,5-trimethylcyclohexane; n-butyl-4,4-bis(t-butylperoxy)valerate; benzoyl peroxide; p-chlorobenzoyl peroxide; 2,4-dichlorobenzoyl peroxide; t-butylperoxy benzoate; t-butylperoxyisopropyl carbonate; diacetyl peroxide; lauroyl peroxide; and t-butyl peroxide.

An organic peroxide which undergoes a mild decomposition reaction is particularly preferred. Examples thereof include: 2,5-dimethyl-2,5-di(t-butylperoxy)-hexyne-3; 2,5-dimethyl-2,5-di(t-butylperoxy)hexane; and bis(t-butylperoxyisopropyl) benzene. A most preferred example thereof is 2,5-dimethyl-2,5-di(t-butylperoxy)-hexyne-3.

The presence of an appropriate crosslinking assistant with such an organic peroxide is preferred because a uniform and moderate crosslinking reaction occurs. Examples of the crosslinking assistant to be used include: sulfur; p-quinone dioxime; p,p'-dibenzoylquinone dioxime; ethylene glycol dimethacrylate; diethylene glycol dimethacrylate; triethylene glycol dimethacrylate; tetraethylene glycol dimethacrylate; polyethylene glycol dimethacrylate; trimethylolpropane trimethacrylate; diaryl phalate; diaryl phthalate; tetraaryl oxyethane; triaryl cyanurate; diaryl phthalate; tetraaryl oxyethane; triaryl cyanurate; N,N-m-phenylene bismaleimide; maleic anhydride; and divinylbenzene. Examples of the crosslinking assistant to be preferably used include: N,N-m-phenylene bismaleimide; p,p'-dibenzoylquinone dioxime; and divinylbenzene. Further, N,N-m-phenylene bismaleimide may be used alone as a crosslinking agent.

As the crosslinking agent for EPDM, a metal oxide, a metal salt of an organic acid, sulfur, a sulfur compound, and the like are known in addition to the organic peroxides described above. However, in the case where EPDM crosslinked with a crosslinking agent other than the organic peroxides is used as an elastic member for a methanol fuel cell cartridge, a fuel cell capable of realizing an operating limit time determined by a DMFC performance test defined in the present invention is hardly obtained.

A mixing ratio of the crosslinking agent in EPDM is preferably 0.5 to 5 parts by weight and particularly preferably 1 to 3 parts by weight of the organic peroxide crosslinking agent with respect to 100 parts by weight of EPDM. An organic peroxide content of less than 0.5 part by weight inhibits sufficient crosslinking and causes insufficient elastic recovery. As a result, the compression set at 70°C becomes more than 80. On the other hand, an organic peroxide content of more than 5 parts by weight inhibits consumption of all organic peroxides in a crosslinking reaction. As a result, crosslinking progresses even after molding of EPDM, to thereby provide an unstable hardness.

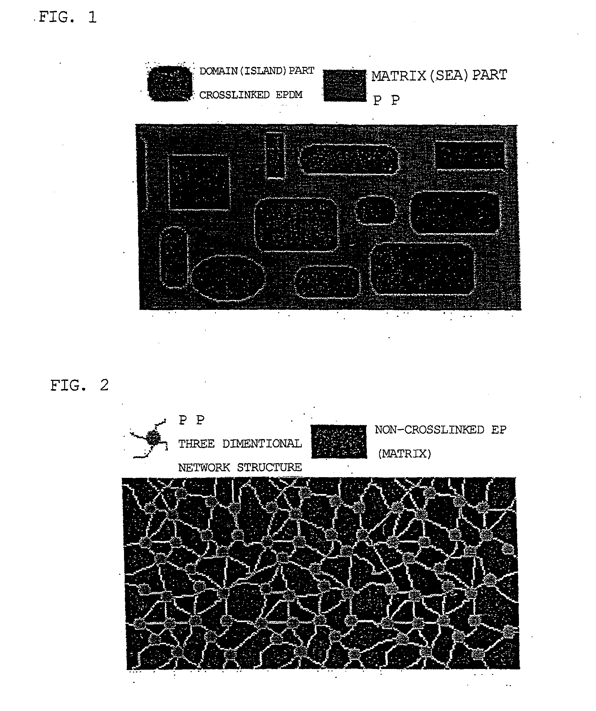

The dynamic vulcanized TPO to be used as the elastic member of the present invention is known and can be obtained by: melt mixing a crosslinkable diene-based rubber or a thermoplastic elastomer, with a polyolefin-based resin; and adding a crosslinking agent or the like for conducting a simultaneous mixing and crosslinking reaction (see Patent Documents 3 and 4, for example). The dynamic vulcanized TPO has an island/sea structure as shown in Fig. 1, obtained by crosslinking of an elastomer alone present as a domain (island) part in a polyolefin-based resin as a matrix (sea) part.

Patent Document 3: JP-A-10-195241
Patent Document 4: JP-A-11-310646

Examples of a preferred polyolefin-based resin constituting the dynamic vulcanized TPO include a homopolymer of crystalline propylene and a propylene-based copolymer mainly containing propylene, but the preferred polyolefin-based resin is not limited thereto. Specific examples thereof include: an ethylene-based polymer such as high-density polyethylene, low-density polyethylene, an ethylene/1-butene copolymer, an ethylene/1-hexene copolymer, or an ethylene/1-octene copolymer; and a polyolefin polymer mainly containing a propylene component such as isotactic polypropylene, a propylene/ethylene copolymer, a propylene/1-butene copolymer, a proypylene/1-pentene copolymer, a propylene/3-methyl-1-butene copolymer, a propylene/1-hexene copolymer, a propylene/3-methyl-1-pentene copolymer, a propylnene/4-methyl-1-pentene copolymer, a propylene/3-ethyl-1-pentene copolymer, a propylene/1-octene copolymer, a propylene/1-decene copolymer, a propylene/1-undecene copolymer, a propylnene/1-butene/ethylene terpolymer, a propylene/1-hexene/1-octene terpolymer, or a propylene/1-hexene/4-methyl-1-penetene terpolymer.

A melt flow rate (MFR) of the propylene-based polymer to be used is preferably 10 to 1,000 as a value measured under the conditions of 230°C and a load of 98 N in accordance with JIS K7210. For assuring sufficient molding property, MFR is particularly preferably 100 to 800. A mixing ratio of an uncrosslinked elastomer and the polyolefin-based resin is generally 95/5 to 10/90 and preferably 90/10 to 40/60 in weight ratio. In the case where the ratio between the uncrosslinked elastomer and the polyolefin-based resin is within the above ranges, the dynamic vulcanized TPO has an excellent balance between mechanical properties such as flexibility and elastic recovery, and molding properties.

The pseudo-crosslinked TPO to be used as the elastic member of the present invention is produced by introducing propylene or the like into a non-crosslinked rubber matrix such as an ethylene/propylene rubber and cooling the resultant, to thereby realize a three dimensional network structure (pseudo-crosslinked structure) of olefin crystals as shown in Fig. 2. As a result, this non-crosslinked TPO has rubber elasticity (compression set) equivalent to that of the dynamic vulcanized TPO. A commercially available product "EXCELINK 3000 series" from JSR Corporation can be used as the pseudo-crosslinked TPO.

The melt flow rate (MFR) of the propylene-based polymer is preferably 1 to 100 as a value measured under the conditions of 230°C and a load of 98 N in accordance with JIS K7210.

In the present invention, for formation of the elastic member for a methanol fuel cell cartridge with the above-mentioned elastomer, 50 to 100 parts by weight of carbon black is generally mixed with respect to 100 parts by weight of the elastomer. Further, other additives such as an age resistor, a plasticizer, a coupling agent for carbon black, a colorant, and a foaming agent may be added within a range not inhibiting the performance of the elastic member.

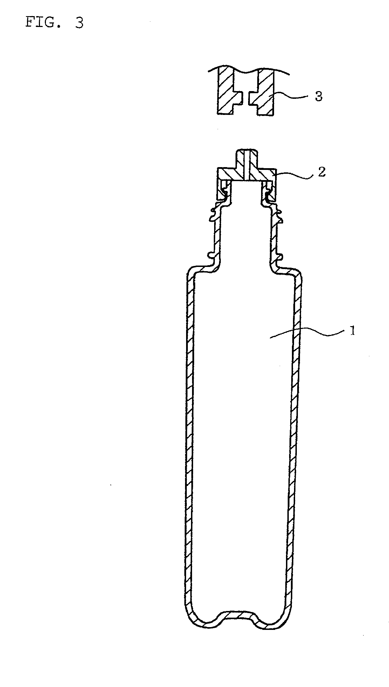

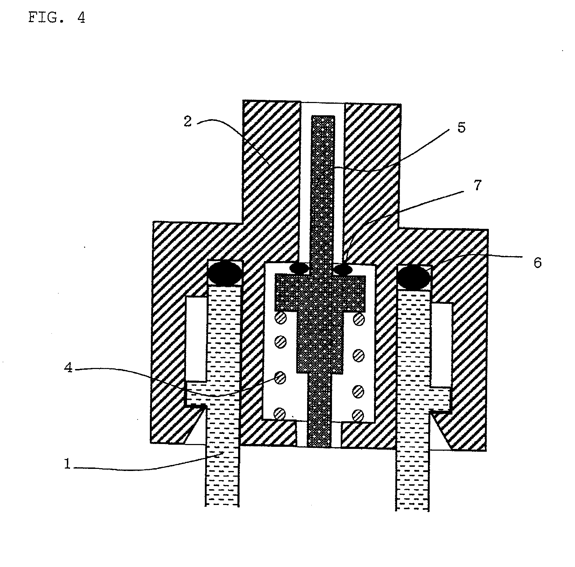

Figs. 3 and 4 are figures showing an example of a methanol fuel cell cartridge of the present invention. Fig. 3 is a sectional schematic diagram of a cartridge main body, and Fig. 4 is an enlarged sectional schematic diagram of a connection part (connector) between the cartridge and a fuel cell body.

A fuel cell cartridge 1 is connected to a connection part 3 of a fuel cell body through a connector 2. Inside the connector 2, a valve operating part 5 is arranged through a biasing member 4 formed of a metal spring which has been subjected to surface treatment for preventing metal dissolution. Further, in a groove-like connection part between a tip of the cartridge main body and inside of the connector 2, a ring-like gasket 6 is arranged. In a connection part between the connector 2 and the valve operating part 5, an O-ring 7 is arranged.

The elastic member of the present invention can be preferably used for a sealing member for a part easily causing methanol leakage such as the gasket 6 or O-ring 7 shown in Fig. 4 or the biasing member 4 used instead of the metal spring, a member such as a valve, or a material forming the connector 2 itself. For a shape of such an elastic member, a ring-like shape, a sheet-like shape, a rectangular shape, or the like may be selected arbitrarily. A size thereof may also be selected arbitrarily.

Examples

Next, the present invention will be described in more detail by way of examples, but the present invention is not limited to the following specific examples.

(Example 1) Peroxide crosslinked EPDM was prepared by mixing 3 parts by weight of a crosslinking agent ["Peroximone F40", trade name, available from NOF Corporation] containing 40 wt% of bis(t-butylperoxyisopropyl)benzene as a peroxide, 100 parts by weight of a naphthene oil ["Esso Process Oil 725", trade name, available from Exxon Mobil Corporation] (added during EPDM synthesis), 1 part by weight of poly(octenylene) ["Vestenamer 8012", trade name, available from Degussa-Huels AG], 0.5 part by weight of 1,4-butanediol dimethacrylate (BDMA), and 0.5 part by weight of carbon black (FEF) into 100 parts by weight of a EPDM terpolymer having an ethylene content {ethylene/(ethylene+propylene)} of 70 mol% and containing a diene component (5-ethylidene-2-norbornene) in an iodine number of 8. The terpolymer was produced through a solution polymerization method with anionic polymerization using a Ziegler-Natta catalyst. Further, after completion of a polymerization reaction, catalyst residues and solvents were removed, and then the naphthene oil was added. The obtained peroxide crosslinked EPDM had a hardness (Type A) of 40 and a compression set of 6%. An O-ring (JIS standard size of P-7) was produced through a conventional compression molding method by using the obtained peroxide crosslinked EPDM.

(Example 2) An ethylene propylene diene rubber composition was prepared in the same manner as in Example 1 except that the ethylene content {ethylene/(ethylene+propylene)} was changed to 50 mol% in Example 1. The obtained peroxide crosslinked EPDM had a hardness (Type A) of 55 and a compression set of 6%. An O-ring (JIS standard size of P-7) was produced through a conventional compression molding method by using the obtained peroxide crosslinked EPDM.

(Example 3) An ethylene propylene diene rubber composition was prepared in the same manner as in Example 1 except that the ethylene content {ethylene/(ethylene+propylene)} was changed to 30 mol% in Example 1. The obtained peroxide crosslinked EPDM had a hardness (Type A) of 70 and a compression set of 5%. An O-ring (JIS standard size of P-7) was produced through a conventional compression molding method by using the obtained peroxide crosslinked EPDM.

(Comparative Example 1) An ethylene propylene diene rubber composition was prepared in the same manner as in Example 1 except that the ethylene content {ethylene/ (ethylene+propylene)} was changed to 20 mol% in Example 1. The obtained peroxide crosslinked EPDM had a hardness (Type A) of 80 and a compression set of 6%. An O-ring (JIS standard size of P-7) was produced through a conventional compression molding method by using the obtained peroxide crosslinked EPDM.

(Comparative Example 2) An ethylene propylene diene rubber composition was prepared in the same manner as in Example 1 except that the ethylene content {ethylene/(ethylene+propylene)} was changed to 80 mol% in Example 1. The obtained peroxide crosslinked EPDM had a hardness (Type A) of 30 and a compression set of 83%. An O-ring (JIS standard size of P-7) was produced through a conventional compression molding method by using the obtained peroxide crosslinked EPDM.

(Example 4) An O-ring (JIS standard size of P-7) was produced through a conventional compression molding method by using a commercially available dynamic vulcanized TPO ("JSR EXELINK 1400B", trade name, available from JSR Corporation). This dynamic vulcanized TPO was obtained by dynamic vulcanizing a resin composition containing crosslinked EPDM as a domain and a polypropylene-based resin as a matrix, and has a hardness (Type A) of 40 and a compression set of 38%.

(Example 5) An O-ring (JIS standard size of P-7) was produced through a conventional compression molding method by using a commercially available dynamic vulcanized TPO ("JSR EXELINK 1700B", trade name, available from JSR Corporation). This dynamic vulcanized TPO was obtained by dynamic vulcanizing a resin composition containing crosslinked EPDM as a domain and a polypropylene-based resin as a matrix, and has a hardness (Type A) of 70 and a compression set of 52%.

(Comparative Example 3) An O-ring (JIS standard size of P-7) was produced in the same manner as in Example 4 except that a commercially available product ("JSR EXELINK 1800B", trade name, available from JSR Corporation) having a hardness (Type A) 80 and a compression set of 58% was used as the dynamic vulcanized TPO in Example 4.

(Example 6) An O-ring (JIS standard size of P-7) was produced through a conventional compression molding method by using a commercially available pseudo-crosslinked TPO ("JSR EXELINK 3400B", trade name, available from JSR Corporation). This pseudo-crosslinked TPO contains an ethylene/$\alpha$-olefin-based copolymer rubber and crystalline polypropylene having a three dimensional network structure and has a hardness (Type A) of 40 and a compression set of 41%.

(Example 7) An O-ring (JIS standard size of P-7) was produced through a conventional compression molding method by using a commercially available pseudo-crosslinked TPO ("JSR EXELINK 3700N", trade name, available from JSR Corporation). This pseudo-crosslinked TPO contains an ethylene/$\alpha$-olefin-based copolymer rubber and crystalline polypropylene having a three dimensional network structure and has a hardness (Type A) of 70 and a compression set of 41%.

(Comparative Example 4) An ethylene propylene diene rubber composition (vulcanized EPDM) was prepared in the same manner as in Example 1 except that 0.4 part by weight of sulfur, 5 parts by weight of zinc oxide, and 1 part by weight of stearic acid were used instead of 0.5 part by weight of a crosslinking assistant 1,4-butanediol dimethacrylate (BDMA) in Example 1. The obtained vulcanized EPDM had a hardness (Type A) of 55 and a compression set of 4%. An O-ring (JIS standard size of P-7) was produced through a conventional compression molding method by using the vulcanized EPDM.

(Comparative Example 5) An O-ring (JIS standard size of P-7) was produced through a conventional compression molding method by using a completely hydrogenated styrene-based thermoplastic elastomer (SEBS) ("JSR DYNARON 1320P", trade name, available from JSR Corporation). The elastomer had a hardness (Type A) of 41 and a compression set of 98%.

[Performance Test]

The O-rings obtained in Examples 1 to 7 and Comparative Examples 1 to 5 were each subjected to the following measurement of hardness (Type A), compression set, and operating limit time determined by a DMFC performance test. The results are shown in Table 1.

[Hardness (Type A)]

The hardness was measured in accordance with JIS K6253 (Type A) by using a measuring device "Hardmatic HH-331" manufactured by Mitutoyo Corporation.

(Compression set)

The elastomer was subjected to treatment at 25% distortion at 70°C for 24 hours, and then a distortion amount was measured in accordance with JIS K6262 "Method of testing compression set of vulcanized rubber and thermoplastic rubber".

(Operating limit time determined by DMFC performance test)

The operating limit time was measured through a test procedure described in paragraph (0007) by using 0.03 g of a finely chopped O-ring. An obtained value (hr) is shown as an operating limit time (immersion) in Table 1.
Further, as performance evaluation of a cartridge having each O-ring attached as a container, O-ring sealing property and DMFC operating limit time were measured as described below and are shown in Table 1.

[Operating limit time determined by attachment test]

A cartridge having a volume of 50 cc was filled with 25 cc of methanol (special grade) and was sealed with a connector having an O-ring obtained in each of Examples. The cartridge was stored at 60°C for 1 week in an inverted position such that the O-ring was in contact with methanol. The operating limit time was measured in the same manner as for the operating limit time determined by the DMFC performance test through the immersion test described above except that an aqueous methanol solution containing the stored methanol prepared to have a methanol concentration of 5 vol% by using Milli-Q was used as a test solution. An obtained value (hr) is shown as an operating limit time (attachment) in Table 1.

(O-ring sealing property)

The O-ring causing no leak during methanol storage and during introduction of the prepared test solution from the cartridge to the fuel cell was indicated by o, and the O-ring causing leak was indicated by ×.
[Table 1]

| | Hardness (Type A) | Compression set | Operating limit time (immesion) | O ring sealing property | Operating limit time (attachment) |
|---|---|---|---|---|---|
| Example 1 | 40 | 6 | >20000 | o | >20000 |
| Example 2 | 55 | 6 | >20000 | o | >20000 |
| Example 3 | 70 | 5 | >20000 | o | >20000 |
| Example 4 | 40 | 38 | >20000 | o | >20000 |
| Example 5 | 70 | 52 | >20000 | o | >20000 |
| Example 6 | 40 | 41 | >20000 | o | >20000 |
| Example 7 | 70 | 41 | >20000 | o | >20000 |
| Comparative Example 1 | 80 | 6 | >20000 | x | Not-conducted [*1] |
| Comparative Example 2 | 30 | 83 | >20000 | x | Not-conducted [*2] |
| Comparative Example 3 | 80 | 58 | >20000 | x | Not-conducted [*3] |
| Comparative Example 4 | 55 | 4 | 2310 | o | 7070 |

(continued)

| | Hardness (Type A) | Compression set | Operating limit time (immesion) | O ring sealing property | Operating limit time (attachment) |
|---|---|---|---|---|---|
| Comparative Example 5 | 41 | 98 | >20000 | x | Not-conducted *4 |
| (Note) *1: A resin molded component was deformed. *2: An O-ring was deformed. *3: A resin molded component was deformed. *4: An O-ring was deformed. | | | | | |

**Claims**

1. An elastic member for a methanol fuel cell cartridge comprising an elastomer having a compression set of 1 to 80, a hardness (Type A) of 40 to 70, and an operating limit time of 10,000 hours or more determined by a DMFC performance test for the fuel cell.

2. An elastic member for a methanol fuel cell cartridge according to claim 1, **characterized in that** the elastomer is selected from a peroxide crosslinked ethylene/propylene/diene copolymer, a dynamic vulcanized olefin-based thermoplastic elastomer, and an olefin crystalline pseudo-crosslinked olefin-based thermoplastic elastomer.

3. An elastic member for a methanol fuel cell cartridge according to claim 1 or 2, **characterized in that** the elastic member is used for a connection part between the methanol fuel cell cartridge and a fuel cell body.

4. An elastic member for a methanol fuel cell cartridge according to any one of claims 1 to 3, **characterized in that** the elastic member serves as a sealing member.

5. An elastic member for a methanol fuel cell according to any one of claims 1 to 3, **characterized in that** the elastic member serves as a valve biasing member.

FIG. 1

DOMAIN(ISLAND) PART
CROSSLINKED EPDM

MATRIX(SEA) PART
P P

FIG. 2

P P
THREE DIMENTIONAL
NETWORK STRUCTURE

NON-CROSSLINKED EP
(MATRIX)

FIG. 3

FIG. 4

## INTERNATIONAL SEARCH REPORT

| | International application No. |
|---|---|
| | PCT/JP2007/050295 |

**A. CLASSIFICATION OF SUBJECT MATTER**
*H01M8/04(2006.01)i, H01M8/02(2006.01)i*

According to International Patent Classification (IPC) or to both national classification and IPC

**B. FIELDS SEARCHED**

Minimum documentation searched (classification system followed by classification symbols)
H01M8/04, H01M8/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2005/013393 A2 (SOCIETE BIC), 10 February, 2005 (10.02.05), Description, page 3, line 24 to page 4, line 15; page 10, lines 12 to 28; page 17, line 27 to page 18, line 8 & JP 2007-500829 A | 1-5 |
| P,A | JP 2006-177492 A (Toyo Seikan Kaisha, Ltd.), 06 July, 2006 (06.07.06), Full text & WO 2006/075517 A | 1-5 |
| P,A | JP 2006-309978 A (Toshiba Corp.), 09 November, 2006 (09.11.06), Full text (Family: none) | 1-5 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 March, 2007 (15.03.07) | 27 March, 2007 (27.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 981 109 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004152741 A
- JP 2004155450 A
- JP 10195241 A
- JP 11310646 A